# EUROPÄISCHE PATENTSCHRIFT

(11) **EP 2 953 981 B1**
(45) Veröffentlichungstag und Bekanntmachung des Hinweises auf die Patenterteilung: **14.06.2023**
(21) Anmeldenummer: 13704922.7
(22) Anmeldetag: 11.02.2013
(51) Int. Cl.: C08F 2/22, C08F 265/04, C08L 51/00

(54) **TRANSPARENTE ARTIKEL AUS PFROPFCOPOLYMEREN DES PVC'S**
TRANSPARENT ARTICLE MADE OF PVC GRAFT COPOLYMERS
ARTICLE TRANSPARENT À BASE DE COPOLYMÈRES GREFFÉS DE PVC

(43) Veröffentlichungstag der Anmeldung: 16.12.2015
(73) Patentinhaber: Vestolit GmbH, 45772 Marl (DE)
(72) Erfinder: BRIZZOLARA, Davide, 45701 Herten (DE); FISCHER, Ingo, 45772 Marl (DE); GEHRKE, Jan-Stephan, 45721 Haltern am See (DE); POLTE, Dieter, 46514 Schermbeck (DE); STIENEKER, Axel, 48143 Münster (DE); STURM, Harald, 46286 Dorsten (DE)
(74) Vertreter: Godemeyer Blum Lenze Patentanwälte Partnerschaft mbB - werkpatent
(86) Internationale Anmeldenummer: PCT/EP2013/052656
(87) Internationale Veröffentlichungsnummer: WO 2014/121851

(56) Entgegenhaltungen:
- EP-A1- 2 067 795
- EP-A2- 0 313 507
- JP-A- 2003 253 082
- F. P. REDING ET AL: "Glass transition and melting point of poly(vinyl chloride)", JOURNAL OF POLYMER SCIENCE, vol. 56, no. 163, 1 January 1962 (1962-01-01), pages 225-231, XP055173329, ISSN: 0022-3832, DOI: 10.1002/pol.1962.1205616319

## Beschreibung

Die Erfindung betrifft ein Verfahren zur Herstellung von Vinylchlorid-Pfropfcopolymeren durch Emulsionspolymerisation und ein Verfahren zur Herstellung von Mischungen solcher Pfropfcopolymere. Die Erfindung betrifft außerdem transparente Formkörper hergestellt unter Verwendung der erfindungsgemäßen Pfropfcopolymere bzw. deren Mischungen.

Weichgemachtes Polyvinylchlorid (PVC) gehört nicht zur Gruppe der thermoplastischen Elastomere (TPE), obwohl es über TPE-Eigenschaften verfügt (PVC-Handbook, Charles E. Wilkes, James W. Summers, Charles Anthony Daniels - 2005, Seite 14). Aufgrund der günstigen Rohstoffkosten, der vielfältigen Verarbeitungs- und guten Produkteigenschaften nimmt es eine Sonderstellung unter den thermoplastischen Elastomeren ein. Weich-PVC hat aufgrund der Bildung von Mikrokristalliten und Dipolwechselwirkungen zwischen Chlor- und Wasserstoffatomen eine sehr gute Dehnbarkeit und Reißfestigkeit. Über den Weichmacheranteil im PVC kann sehr einfach die Härte und Flexibilität eines Produkts eingestellt werden. Das hat für den Verarbeiter große logistische Vorteile, weil er aus wenigen Einsatzstoffen eine Vielzahl an Produkten herstellen kann. Einzig die Migrationsfähigkeit des niedermolekularen Weichmachers ist als Nachteil zu betrachten. Durch die Migration des Weichmachers versprödet das Material, was zu einer Verschlechterung der mechanischen Eigenschaften führt.

Seit vielen Jahren werden verschiedene oligomere und polymere Weichmacher verwendet, die aufgrund des hohen Molekulargewichts eine geringe bis keine Tendenz zur Migration aufweisen (Domininghaus - Kunststoffe, 7., neu bearbeitete und erw. Auflage 2008). Bekannte Beispiele sind Copolymere bestehend aus Ethylen-Vinylacetat-Vinylchlorid (EVA-VC), Ethylen-Vinylacetat (EVA, Levapren^{®}), Acrylnitril-Butadien (NBR), Styrol-Butadien (SBR), Ethylen-Vinylacetat-Kohlenmonoxid (Elvaloy^{®}), Styrol-Butadien-Styrol (SBS, Kraton^{®}) etc. Die hochmolekularen Weichmacher werden mit dem PVC gemischt oder in einer Suspensionspolymerisation mit PVC gepfropft. Diese Produkte werden nur bei Spezialanforderungen (Kälteflexibilität, geringe Migration, Fettbeständigkeit, etc.) verwendet, weil sonst die Nachteile überwiegen, wie bspw. geringere Weichmachung, komplexere Verarbeitung, schlechtere Weiterreißfestigkeit, etc. Als besonders großer Nachteil ist anzusehen, dass Formkörper opak sind, die aus einer Mischung von PVC und den meisten polymeren Weichmachern (Elastomere) hergestellt wurden.

Die im Stand der Technik beschriebenen und in Emulsions- oder Suspensionsfahrweise hergestellten PBA-g-PVC-Pfropfcopolymere sind nur zu transluzenten oder opaken Formkörpern verarbeitbar.

Vernetzte Polyacrylsäureester (PAE) können zur Verbesserung der Kerbschlagzähigkeit von Hart-PVC eingesetzt werden (EP 0472852). In der DE 3803036 wird ein Suspensionsverfahren beschrieben, durch das ein PVC mit einem Anteil von 65 Gew.-% eines vernetzten PAE erhalten werden kann. Das Produkt kann als Schlagzähmodifier oder als polymerer Weichmacher für PVC eingesetzt werden.

In der EP 0647663 wird ein Verfahren zur Herstellung von thermoplastisch elastomeren Pfropfcopolymerisaten des PVC's mit vernetzten Polyacrylaten als Pfropfgrundlage beschrieben.

Im Stand der Technik wird als einzig uns bekannte Methode zur Herstellung von transparenten Polyacrylsäureester modifizierten PVC-Artikeln mittels Verfahren wie Extrudieren, Spritzgießen, Kalandrieren die Verwendung von Pfropfcopolymeren beschrieben, die einen bestimmten Anteil Polystyrol in der Polyacrylatphase enthalten. Der Polystyrolanteil gleicht aufgrund seines höheren Brechnungsindex (n_{D}²⁰ = 1,60) den Unterschied der Brechungsindizes von Polybutylacrylat und PVC aus (Domininghaus - Kunststoffe, 7., neu bearbeitete und erw. Auflage 2008, Kapitel 2.1.2.2.1 Erhöhung der Schlagzähigkeit - Polyacrylate als Modifiziermittel für transparente PVC-Artikel, Seite 372). Aufgrund der hohen Glasübergangstemperatur von Polystyrol ist das Prinzip nur für Hart-PVC geeignet, weil der Polystyrolanteil die weichmachende Wirkung von Polyacrylaten aufhebt.

Außerdem wird durch den Polystyrolanteil die UV- und Witterungsstabilität der PVC-Artikel verschlechtert.

Der Erfindung lag daher die Aufgabe zu Grunde, Materialien ohne Zusatz externer Weichmacher (in gegebenenfalls unterschiedlichen Härtegraden Shore A 70 bis Shore D 80) auf Basis von Vinylchlorid bereitzustellen, die zu transparenten Folien und Formteilen verarbeitet werden kann.

Gegenstand der vorliegenden Erfindung ist ein Verfahren zur Herstellung eines Vinylchlorid-Pfropfcopolymers durch Emulsionspolymerisation, wobei das Pfropfcopolymer eine Pfropfgrundlage und eine aufgepfropfte zumindest teilweise aus Vinylchlorid bestehende Copolymerphase enthält, umfassend die Schritte:
a) Herstellen einer Pfropfgrundlage durch Polymerisation von Monomeren, wobei durch Wahl der verwendeten Monomere die Glasübergangstemperatur Tg der Pfropfgrundlage eingestellt wird, und
b) Aufpfropfen einer Copolymerphase auf die unter a) hergestellte Pfropfgrundlage durch Emulsionspolymerisation unter Erhalt eines Vinylchlorid-Pfropfcopolymer-Latexes, wobei durch Wahl der verwendeten Monomere und der gegebenenfalls verwendeten Comonomere die Glasübergangstemperatur Tg der aufgepfropften Copolymerphase so eingestellt wird, dass die Glasübergangstemperatur Tg der Pfropfgrundlage niedriger ist als die Glasübergangstemperatur Tg der aufgepfropften Copolymerphase, und
c) Isolieren des Vinylchlorid-Pfropfcopolymers als Feststoff aus dem Vinylchlorid-Pfropfcopolymer-Latex,
dadurch gekennzeichnet, dass durch Wahl der Polymerisationsbedingungen in Schritt b) die mittlere Teilchengröße des Vinylchlorid-Pfropfcopolymers auf unter 200 nm, bevorzugt unter 150 nm, und besonders bevorzugt unter 100 nm, eingestellt wird.

In einer systematischen Untersuchung wurde nämlich gefunden, dass die Teilchengröße des in Emulsionfahrweise hergestellten Pfropfcopolymers einen großen Einfluss auf die Transparenz daraus hergestellter Formkörper hat. Durch die Absenkung des Teilchendurchmessers unterhalb bestimmter Werte wird die Transparenz einer daraus hergestellten Pressplatte stark verbessert. Dies gilt auch für Vinylchlorid-Pfropfcopolymere mit vernetzter Pfropfgrundlage und unvernetzter Pfropfschale oder mit vernetzter Pfropfgrundlage und vernetzter Pfropfschale.

Die Glasübergangstemperatur Tg der aufgepfropften Copolymerphase liegt dabei typischerweise im Bereich von über 20 bis 120°C und/oder die der Pfropfgrundlage im Bereich von -80 bis 20°C. In einer bevorzugten Ausführungsform der Erfindung liegt die Glasübergangstemperatur Tg der aufgepfropften Copolymerphase zwischen 40 und 90 °C und die der Pfropfgrundlage zwischen -60 und -20°C. Die Tg's der aufgepfropften Copolymerphase und der Pfropfgrundlage ergeben sich aus der Zusammensetzung der jeweils verwendeten Monomere.

Die Vinylchlorid-Pfropfcopolymere werden im Emulsionsverfahren hergestellt. Dabei ist die Pfropfgrundlage durch Copolymerisation von Vinylverbindungen herstellbar. Die aufgepfropfte ist aus 60 bis 100 Gew.-%, bevorzugt 80 bis 100 Gew.-%, Vinylchlorid und aus 0 bis 40 Gew.-% , bevorzugt 0 bis 20 Gew.-%, anderen polymerisierbaren Vinylverbindungen herstellbar.

In einer weiteren bevorzugten Ausführungsform ist die Pfropfgrundlage und/oder die aufgepfropfte Copolymerphase vernetzt.

Die Emulsionspolymerisation wird bevorzugt semikontinuierlich ausgeführt. Bei der Herstellung der Pfropfgrundlage können Wasser, Initiatoren, Monomere, Emulgatoren und andere Hilfsmittel vorgelegt und teilweise dosiert werden. In einer bevorzugten Ausführungsform werden Wasser und die Gesamtmenge an Emulgator vorgelegt und die Monomere sowie die Initiatoren dosiert. Die Zulaufgeschwindigkeit der Dosierungen richtet sich nach der Umsatzgeschwindigkeit. Die Polymerisationsdauer wird durch die Menge an eingesetztem Initiator auf ein bis drei Stunden eingestellt. Nach Beendigung der Polymerisation wird die Pfropfgrundlage aufgearbeitet und für die Herstellung des Pfropfcopolymers vorgelegt. Vinylchlorid und gegebenenfalls andere polymerisierbare Vinylverbindungen werden in 10 min bis 180 min zudosiert. In einer bevorzugten Ausführungsform wird die VC-Menge in eine Vorlagemenge und eine zuzudosierende Menge geteilt. Hierbei werden 5 - 20 Teile VC vorgelegt (im Schuss), bis zum Druckabfall polymerisiert und mit der Dosierung der VC-Restmenge begonnen. Die Temperatur wird angepasst, um den gewünschten K-Wert einzustellen. Um die Polymerisation voranzutreiben, wird parallel Initiator dosiert. Es kann Emulgator zugegeben werden, um die Dispersionsstabilität zu erhöhen. Der Feststoffgehalt der auspolymerisierten Dispersion liegt zwischen 20 und 60 Gew.-% und bevorzugt zwischen 30 und 55 Gew.-%.

Geeignete Vinylverbindungen für die Pfropfgrundlage sind zum Beispiel Acrylsäureester oder Methacrylsäureester (kurz: (Meth)acrylsäureester). Auch Butadien, 2-Chlor-Butadien, 1-Buten, Isopren, Vinylidenchlorid, Vinylacetat, Vinylalkylether, etc. können als Vinylverbindung verwendet werden.

Für die Pfropfung wird vorzugsweise nur Vinylchlorid verwendet. Es können aber auch (Meth)acrylsäureester, die über ein bis 12 C-Atome in der Alkylkette des veresterten linearen, verzweigten oder zyklischen Alkohols, wie z.B. Methylacrylat, Ethylacrylat, Propylacrylat, Butylacrylat, tert.-Butylacrylat, Pentylacrylat, iso-Pentylacrylat, Cyclohexylacrylat, Ethylhexylacrylat, Methylmethacrylat, Ethylmethacrylat, Propylmethlacrylat, Butylmethacrylat, tert.-Butylmethacrylat, Pentylmethacrylat, iso-Pentylmethacrylat, Ethylhexylmethacrylat, Cyclohexylmethacrylat, etc. homo- oder copolymerisiert werden.

In Schritt b) des erfindungsgemäßen Verfahrens wird die Copolymerphase typischerweise unter Verwendung mindestens eines Emulgators durch Emulsionspolymerisation aufgepfropft, wobei vorzugsweise 60 bis 100 Gew.-% der Emulgatormenge bezogen auf die gesamte Emulgatormenge vorgelegt wird.

Die Polymerisationstemperatur bei der Herstellung jeder der Pfropfgrundlagen liegt typischerweise zwischen 20 und 90 °C, bevorzugt zwischen 60 und 85 °C.

Die Polymerisationstemperatur bei der Herstellung jeder der aufgepfropften Copolymerphasen liegt typischerweise zwischen 45 und 90 °C, bevorzugt zwischen 55 und 75 °C.

Der Anteil der Pfropfgrundlage beträgt bevorzugt 5 bis 70 Gew.-% und der Anteil der aufgepfropfter Copolymerphase bevorzugt 30 bis 95 Gew.-%, jeweils bezogen auf das Vinylchlorid-Pfropfcopolymer.

Geeignete ionische Emulgatoren sind Alkylsulfonate, Arylsulfonate, Alkylsulfate, Alkylethersulfate, Fettsäuresalze, Diarylsulfonate, etc. Es können außerdem nichtionische Emulgatoren, wie bspw. Alkyletheralkohole mit zwei bis 20 C-Atomen in der Alkylkette und ein bis 20 Ethylenglykoleinheiten, Fettalkohole, etc. allein oder in Kombination mit ionischen Emulgatoren verwendet werden. Die Gesamtmenge an Emulgator liegt zwischen 0,1 bis 5 Gew.-% bezogen auf die eingesetzte Monomermenge.

Geeignete Initiatoren sind wasserlösliche Peroxide, die allein durch den thermischen Zerfall Radikale bilden oder in Kombination mit einem Reduktionsmittel und gegebenenfalls einem Katalysator zum Zerfall gebracht werden. Die Menge der verwendeten Initiatoren liegt erfahrungsgemäß zwischen 0,01 bis 0,5 Gew.-% bezogen auf die eingesetzten Monomere.

In einer bevorzugten Ausführungsform der Erfindung wird die Pfropfgrundlage durch Copolymerisation mit einem oder mehreren verschiedenen Monomeren, welche zwei oder mehr nicht miteinander konjugierte ethylenisch ungesättigte Doppelbindungen enthalten, vernetzt. Optional kann auch zusätzlich die aufgepfropfte Copolymerphase durch Copolymerisation mit einem oder mehreren verschiedenen Monomeren, welche zwei oder mehr nicht miteinander konjugierte ethylenisch ungesättigte Doppelbindungen enthalten, vernetzt werden.

In einer weiteren bevorzugten Ausführungsform der Erfindung wird a) die Pfropfgrundlage und die Pfropfschale nicht vernetzt oder b) die Pfropfgrundlage nicht vernetzt und die Pfropfschale vernetzt.

Geeignete Verbindungen für die Vernetzung sind Diallylphthalat, Allylmethacrylat, Allylacrylat, Ethylenglykoldimethacrylat, Propylenglykoldimethacrylat, Butylenglykoldiacrylat, Trimethylenglykoldiacrylat, Glycidylmethacrylat, Glycidylacrylat etc.

In dem erfindungsgemäßen Verfahren wird mittels Emulsionspolymerisation ein Vinylchlorid-Pfropfcopolymer-haltiger Latex erhalten. Der Feststoff wird dann entweder durch Zugabe eines Elektrolytes, Koagulation und mechanischen Trennverfahren wie Filtration, Dekantieren, Zentrifugieren des Latex mit nachfolgender Trocknung oder durch Sprühtrocknung abgetrennt.

In einer besonderen Ausführungsform der Erfindung werden mindestens zwei verschiedene Vinylchlorid-Pfropfcopolymere unabhängig voneinander hergestellt und anschließend unter Erhalt einer Mischung gemischt, wobei sich die mindestens zwei verschiedenen Pfropfcopolymere durch ihre jeweilige prozentuale Gewichtsverteilung an Pfropfgrundlage und aufgepfropfter Copolymerphase voneinander unterscheiden.

In einer bevorzugten Ausführungsform der Erfindung werden die Schritte a), b) und c) und das Mischen so durchgeführt, dass die Mischung enthält
A) ein oder mehrere Pfropfcopolymere A jeweils enthaltend 41 bis 70 Gew.-% an Pfropfgrundlage und 30 bis 59 Gew.-% an aufgepfropfter Copolymerphase, und/oder
B) ein oder mehrere Pfropfcopolymere B jeweils enthaltend 26 bis 40 Gew.-% an Pfropfgrundlage und 60 bis 74 Gew.-% an aufgepfropfter Copolymerphase, und/oder
C) ein oder mehrere Pfropfcopolymere C jeweils enthaltend 5 bis 25 Gew.-% an Pfropfgrundlage und 75 bis 95 Gew.-% an aufgepfropfter Copolymerphase,
wobei die Mischung mindestens zwei verschiedene Pfropfcopolymere enthält, die unter A) und B), unter B) und C), unter A) und C) fallen, oder mindestens drei verschiedene Pfropfcopolymere, die unter A), B) und C) fallen.

In einer weiteren bevorzugten Ausführungsform der Erfindung werden die Schritte a), b) und c) und das Mischen so durchgeführt, dass eine Mischung erhalten wird bestehend aus
A) ein oder mehreren Pfropfcopolymeren A in einer Menge von 1 bis 99 Gew.-% bezogen auf die Mischung, wobei jedes Pfropfcopolymer A enthält
   - 30 bis 59 Gew.-% einer zumindest teilweise aus Vinylchlorid hergestellten aufgepfropften Copolymerphase mit einer Glasübergangstemperatur Tg im Bereich von über 20 bis 120°C, und
   - 41 bis 70 Gew.-% einer Pfropfgrundlage mit einer Glasübergangstemperatur Tg im Bereich von -80 bis 20°C, und/oder
b) ein oder mehreren Pfropfcopolymeren B in einer Menge von 1 bis 99 Gew.-% bezogen auf die Mischung, wobei jedes Pfropfcopolymer B enthält
   - 60 bis 74 Gew.-% einer zumindest teilweise aus Vinylchlorid hergestellten aufgepfropften Copolymerphase mit einer Glasübergangstemperatur Tg im Bereich von über 20 bis 120°C, und
   - 26 bis 40 Gew.-% einer Pfropfgrundlage mit einer Glasübergangstemperatur Tg im Bereich von -80 bis 20°C, und/oder
C) ein oder mehreren Pfropfcopolymeren C in einer Menge von 1 bis 99 Gew.-% bezogen auf die Mischung, wobei jedes Pfropfcopolymer C enthält
   - 75 bis 95 Gew.-% einer zumindest teilweise aus Vinylchlorid hergestellten aufgepfropften Copolymerphase mit einer Glasübergangstemperatur Tg im Bereich von über 20 bis 120°C, und
   - 5 bis 25 Gew.-% einer Pfropfgrundlage mit einer Glasübergangstemperatur Tg im Bereich von -80 bis 20°C, und/oder
D) weiteren Bestandteilen in einer Menge von 0 bis 75 Gew.-% bezogen auf die Mischung,
wobei die Mischung mindestens 25 Gew.-% an Pfropfcopolymeren enthält, die gemeinsam mindestens zwei der Bedingungen A), B) und C) erfüllen, und der Gesamtanteil der unter A), B), C) und D) fallenden Bestandteile 100 Gew.-% ergibt.

Gegenstand der Erfindung ist auch ein Vinylchlorid-Pfropfcopolymer hergestellt nach dem oben beschriebenen Verfahren.

Ein weiterer Gegenstand der Erfindung ist eine Mischung enthaltend verschiedene Vinylchlorid-Pfropfcopolymere hergestellt nach dem oben beschriebenen Verfahren.

Ebenfalls Gegenstand der Erfindung ist ein Artikel hergestellt unter Verwendung eines Vinylchlorid-Pfropfcopolymer hergestellt nach dem oben beschriebenen Verfahren oder unter Verwendung einer Mischung enthaltend verschiedene Vinylchlorid-Pfropfcopolymere hergestellt nach dem oben beschriebenen Verfahren.

Bevorzugte erfindungsgemäße Artikel weisen eine Transmission von mindestens 65%, bevorzugt mindestens 75%, und besonders bevorzugt mindestens 85%, und/oder einen Haze-Wert von höchstens 60, bevorzugt von höchstens 50, und besonders bevorzugt von höchstens 40, auf.

Gegenstand der Erfindung ist auch die Verwendung eines Vinylchlorid-Pfropfcopolymers sowie die Verwendung der oben beschriebenen Mischungen zur Herstellung eines Artikels, vorzugsweise zur Herstellung von Folien mittels Extrusion und/oder Kalandrierung oder zur Herstellung von Formkörpern mittels Extrusion oder Spritzguss oder anderen thermoplastischen Formgebungsverfahren..

In den folgenden Beispielen wird das erfindungsgemäße Verfahren zur Herstellung von Pfropfcopolymeren des Vinylchlorids mit hoher Transparenz beschrieben.

### Beispiele

### Beispiel 1:

### Pfropfgrundlage:

In einem 10-L-Rührreaktor wurden 4156 g VE-Wasser, 0,4 g Allylmethacrylat, 78 g Butylacrylat, 705,9 g Kaliummyristat (Konzentration 5 Gew-%) und 0,720 g Kaliumperoxodisulfat vorgelegt und auf 80 °C aufgeheizt. Nachdem die Reaktion angesprungen war wurde mit der Dosierung von 784,3 g einer 0,3 %igen wässrigen Kaliumperoxodisulfatösung in 180 min begonnen. Parallel wurden 11,36 g Allylmethacrylat und 2263 g Butylacrylat in 180 min dosiert. Nach Dosierende wurde die Reaktor-Innentemperatur noch für 60 min gehalten und danach abgekühlt.

Es wurden 7911 g der Dispersion erhalten. Der Feststoffgehalt betrug 29,8 %, die Oberflächenspannung 52,2 mN/m und der pH-Wert 7,6. Der mittlere volumenbezogene Teilchendurchmesser beträgt 12 nm.

### Pfropfcopolymer:

In einem 10-L-Druckautoklaven mit wassergekühltem Doppelmantel und Blattrührer wurden 1367 g Wasser, 332 g einer 5 %igen Kaliummyristatlösung, 3087 g der Pfropfgrundlage, 4,32 g Diallylphthalat und 1076 g Vinylchlorid vorgelegt und auf 68 °C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt betrug 30,7 %, die Oberflächenspannung 56,7 mN/m, der pH-Wert 7,7. Der mittlere volumenbezogene Teilchendurchmesser beträgt 61 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 46,9 Gew-% bestimmt.

### Beispiel 2:

### Pfropfgrundlage:

Es wurde die Pfropfgrundlage aus Beispiel 1 verwendet.

### Pfropfcopolymer:

In einem 10-L-Druckautoklaven mit wassergekühltem Doppelmantel und Blattrührer wurden 2365 g Wasser, 387,3 g einer 5 %igen Kaliummyristatlösung, 2506 g der Pfropfgrundlage, 6,347 g Diallylphthalat und 1580 g Vinylchlorid vorgelegt und auf 68°C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 30,5 %, die Oberflächenspannung 58,5 mN/m, der pH-Wert 8,0. Der mittlere volumenbezogene Teilchendurchmesser beträgt 58 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 33 Gew-% bestimmt.

### Beispiel 3:

### Pfropfgrundlage:

Der Ansatz aus Beispiel 1 wurde wiederholt. Es wurden 7909 g einer wässrigen Dispersion ausgefahren. Der Feststoffgehalt der Dispersion betrug 30 %, die Oberflächenspannung 54,4 mN/m, der pH-Wert 7,4. Der mittlere volumenbezogene Teilchendurchmesser beträgt 12 nm.

### Pfropfcopolymer:

Es wurden 3144 g Wasser, 387,3 g einer 5 %igen Kaliummyristatlösung, 1400 g der Pfropfgrundlage, 1906 g Vinylchlorid und 7,63 g Diallylphthalat vorgelegt und in Anlehnung an Beispiel 1 polymerisiert. Die Dispersion wurde ausgefahren. Der Feststoffgehalt der Dispersion betrug 29,6 %, die Oberflächenspannung 51,9 mN/m, der pH-Wert 8,1. Der mittlere volumenbezogene Teilchendurchmesser beträgt 56 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 19,2 Gew-% bestimmt.

### Beispiel 4:

### Pfropfgrundlage:

In einem 10-L-Rührreaktor wurden 2642 g VE-Wasser, 0,80 g Diallylphthalat, 77 g Butylacrylat, 315,3 g Kaliummyristat (Konzentration 1,85 Gew-%) und 0,714 g Kaliumperoxodisulfat vorgelegt und auf 80 °C aufgeheizt. Nachdem die Reaktion angesprungen war wurde mit der Dosierung von 1167 g einer 0,1 %igen wässrigen Ammoniumperoxodisulfatösung in 180 min begonnen. Parallel wurden 22,55 g Diallylphthalat, 2233 g Butylacrylat und 1009 g einer 1,85 %igen Kaliummyristatlösung in 180 min dosiert. Nach Dosierende wurde die Reaktor-Innentemperatur noch für 60 min gehalten und danach abgekühlt. Es wurden 7335 g der Dispersion erhalten. Der Feststoffgehalt betrug 30,9 %, die Oberflächenspannung 54,4 mN/m und der pH-Wert 8,3.

### Pfropfcopolymer:

Es wurden 2144 g Wasser, 280 g einer 5 %igen Kaliummyristatlösung, 3021 g der Pfropfgrundlage vorgelegt und auf 68 °C aufgeheizt. Anschließend werden 117 g Vinylchlorid zugegeben und weitere 1278 g Vinylchlorid in 100 min dosiert. Für die Aktivierung wurde Wasserstoffperoxid- und Ascorbinsäurelösung verwendet. Deren Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Der Feststoffgehalt der Dispersion betrug 28,8 Gew-%, die Oberflächenspannung 54,9 mN/m, der pH-Wert 7,5. Der mittlere volumenbezogene Teilchendurchmesser beträgt 92 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 41,1 Gew-% bestimmt.

### Beispiel 5:

### Pfropfgrundlage:

In einem 10-L-Rührreaktor wurden 1784 g VE-Wasser, 68,25 g Butylacrylat, 0,35 g Allylmethacrylat, 411,8 g Kaliummyristat (Konzentration 1 Gew-%) und 0,63 g Kaliumperoxodisulfat vorgelegt und auf 80 °C aufgeheizt. Nachdem die Reaktion angesprungen war wurde mit der Dosierung von 686 g einer 0,3 %igen wässrigen Kaliumperoxodisulfatösung in 180 min begonnen. Parallel wurden 1980 g Butylacrylat, 9,94 g Allylmethacrylat und 2059 g einer 1 %igen Kaliummyristatlösung in 180 min dosiert. Nach Dosierende wurde die Reaktor-Innentemperatur noch für 60 min gehalten und danach abgekühlt. Es wurden 6963 g Dispersion ausgefahren mit einem Feststoffgehalt von 29,6 Gew-%, Oberflächenspannung 56,4 und pH-Wert 8,1. Der mittlere volumenbezogene Teilchendurchmesser beträgt 74 nm.

### Pfropfcopolymer:

Der Ansatz wurde in Anlehnung an Beispiel 1 hergestellt. Der Feststoffgehalt der Dispersion betrug 32,4 Gew-%, die Oberflächenspannung 48,8 mN/m, der pH-Wert 8,0. Der mittlere volumenbezogene Teilchendurchmesser beträgt 131 nm. Der Ansatz wurde mit Calciumchlorid gefällt und abgenutscht. Der Rückstand wurde bei 30 °C im Umlufttrockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 50,0 Gew-% bestimmt.

Die erfindungsgemäßen Beispiele lassen sich zu transparenten Pressplatten verarbeiten. Die Erfindungsbeispiele sind dadurch gekennzeichnet, dass die Pfropfgrundlage und Pfropfschale unvernetzt sind oder dass die Pfropfgrundlage unvernetzt ist und die Pfropfschale vernetzt ist oder dass bei Vernetzung der Pfropfgrundlage und der Pfropfschale oder dass nur bei Vernetzung der Pfropfgrundlage und unvernetzter Pfropfschale die mittlere Teilchengröße unter 150 nm liegt.

Die unten aufgeführten Vergleichsbeispiele belegen, dass Pressplatten opak sind, die aus Pfropfcopolymeren mit einer mittleren Teilchengröße größer 150 nm hergestellt wurden, die eine vernetzte Pfropfgrundlage und Pfropfschale oder eine vernetzte Pfropfgrundlage und unvernetzte Pfropfschale aufweisen.

### Beispiel 6:

### Pfropfgrundlage:

In einem 10-L-Rührreaktor wurden 1887 g VE-Wasser, 68,25 g Butylacrylat, 0,35 g Allylmethacrylat, 308,8 g Kaliummyristat (Konzentration 1 Gew-%) und 0,63 g Kaliumperoxodisulfat vorgelegt und auf 80 °C aufgeheizt. Nachdem die Reaktion angesprungen war, wurde mit der Dosierung von 686 g einer 0,3 %igen wässrigen Kaliumperoxodisulfatösung in 180 min begonnen. Parallel wurden 1980 g Butylacrylat, 9,94 g Allylmethacrylat und 2059 g einer 1 %igen Kaliummyristatlösung in 180 min dosiert. Nach Dosierende wurde die Reaktor-Innentemperatur noch für 60 min gehalten und danach abgekühlt. Es wurden 6925 g Dispersion ausgefahren mit einem Feststoffgehalt von 29,6 Gew-%, Oberflächenspannung 52,6 und pH-Wert 8,2. Der mittlere volumenbezogene Teilchendurchmesser beträgt 135 nm.

### Pfropfcopolymer:

Der Ansatz wurde in Anlehnung an Beispiel 1 hergestellt. Der Feststoffgehalt der Dispersion betrug 28,3 Gew-%, die Oberflächenspannung 42,5 mN/m, der pH-Wert 8,4. Der mittlere volumenbezogene Teilchendurchmesser beträgt 176 nm. Der Ansatz wurde mit Calciumchlorid gefällt und abgenutscht. Der Rückstand wurde bei 30°C im Umlufttrockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 49,6 Gew-% bestimmt.

### Vergleichsbeispiel 1:

### Pfropfgrundlage:

In einem 10-L-Rührreaktor wurden 1990 g VE-Wasser, 68,25 g Butylacrylat, 0,35 g Allylmethacrylat, 205,9 g Kaliummyristat (Konzentration 1 Gew-%) und 0,63 g Kaliumperoxodisulfat vorgelegt und auf 80 °C aufgeheizt. Nachdem die Reaktion angesprungen war, wurde mit der Dosierung von 686 g einer 0,3 %igen wässrigen Kaliumperoxodisulfatösung in 180 min begonnen. Parallel wurden 1980 g Butylacrylat, 9,94 g Allylmethacrylat und 2059 g einer 1 %igen Kaliummyristatlösung in 180 min dosiert. Nach Dosierende wurde die Reaktor-Innentemperatur noch für 60 min gehalten und danach abgekühlt. Der mittlere volumenbezogene Teilchendurchmesser beträgt 180 nm.

### Pfropfcopolymer:

Der Ansatz wurde in Anlehnung an Beispiel 1 hergestellt. Der Feststoffgehalt der Dispersion betrug 26,3 Gew-%, die Oberflächenspannung 40,8 mN/m, der pH-Wert 8,8. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 52 Gew-% bestimmt. Der mittlere volumenbezogene Teilchendurchmesser beträgt 224 nm.

### Vergleichsbeispiel 2:

### Pfropfgrundlage:

In einem 10-L-Rührreaktor wurden 2134 g VE-Wasser, 68,29 g Butylacrylat, 0,34 g Allylmethacrylat, 61,76 g Kaliummyristat (Konzentration 1 Gew-%) und 0,63 g Kaliumperoxodisulfat vorgelegt und auf 80 °C aufgeheizt. Nachdem die Reaktion angesprungen war, wurde mit der Dosierung von 686,3 g einer 0,3 %igen wässrigen Kaliumperoxodisulfatösung in 180 min begonnen. Parallel wurden 1980 g Butylacrylat, 9,94 g Allylmethacrylat und 2059 g einer 1 %igen Kaliummyristatlösung in 180 min dosiert. Nach Dosierende wurde die Reaktor-Innentemperatur noch für 60 min gehalten und danach auf abgekühlt.

Es wurden 6998 g einer wässrigen Dispersion mit einem Feststoffgehalt von 29,6 Gew-%, Oberflächenspannung 47,9 mN/m und pH-Wert 8,3 erhalten. Der mittlere volumenbezogene Teilchendurchmesser beträgt 272 nm.

### Pfropfcopolymer:

In einem 10-L-Druckautoklaven mit wassergekühltem Doppelmantel und Blattrührer wurden 1515 g Wasser, 387 g einer 5 %igen Kaliummyristatlösung, 3705 g der Pfropfgrundlage, 9,33 g Diallylphthalat und 1227 g Vinylchlorid vorgelegt und auf 68 °C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 27,1 Gew-%, die Oberflächenspannung 38,8 mN/m, der pH-Wert 8,2. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 56,6 Gew-% bestimmt. Der mittlere volumenbezogene Teilchendurchmesser beträgt 336 nm.

### Vergleichsbeispiel 3:

### Pfropfgrundlage:

Es wurde die gleiche Pfropfgrundlage wie beim Vergleichsbeispiel 3 verwendet.

### Pfropfcopolymer:

Es wurden 1299 g Wasser, 332 g einer 5 %igen Kaliummyristatlösung, 3176 g der Pfropfgrundlage und 1060 g Vinylchlorid vorgelegt und in Anlehnung an Vergleichsbeispiel 3 polymerisiert. Die Dispersion wurde ausgefahren. Der Feststoffgehalt der Dispersion betrug 27,1 Gew-%, die Oberflächenspannung 37,4 mN/m, der pH-Wert 8,7. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 57,2 Gew-% bestimmt. Der mittlere volumenbezogene Teilchendurchmesser beträgt 327 nm.

Die Pulver der Pfropfcopolymere wurden auf einer Zweirollenwalze zu Walzfellen verarbeitet und verpresst. In der nachfolgenden Tabelle 1 sind der Polybutylacrylat-Anteil, die Vernetzung, die Teilchengröße der Pfropfcopolymere sowie die optischen Eigenschaften (Transmission, Haze) der Pressplatten aufgeführt.

### Zur experimentellen Durchführung:

### Teilchengrößenmessung:

Die Teilchengrößenverteilungen wurden mit einem Microtrac Blue-Wave der S 3500-Serie von Particle-Metrix gemessen. Der zulässige Messbereich liegt zwischen 0,01 und 2000 µm . Für die Messung wurde eine Standardprozedur für Dispersionen angelegt, in der bestimmte physikalische Eigenschaften der Dispersion hinterlegt sind. Vor der Messung werden drei Tropfen Hellmanex^{®} der Firma Hellmanex-Analytics mit einer 3-ml-Einwegpipette zu dem vollentsalztem Wasser in die Zirkulationseinheit gegeben. Die Sauberkeit des Messsystems wird durch eine Nullmessung überprüft. Es wird solange vorsichtig Dispersion in die Probeneinheit gegeben, bis ein Loading-Factor von ca. 0,004 erreicht wird. In der Regel sind das 1 bis 2 Tropfen Dispersion. Die Messdauer beträgt 30 s. Die Auswertung der Messung erfolgt automatisch. Es wird der mittlere volumenbezogene Teilchendurchmesser verwendet.

### Zweirollen-Walzwerk (inklusive Verarbeitungsbedingungen und Rezeptur)

Zur Bestimmung mechanischer Werte und optischer Eigenschaften müssen Probekörper bereitgestellt werden. Die Herstellung der Walzfelle erfolgt unter folgenden Bedingungen.

### Rezeptur (Spatelmischung)

| | | |
|---|---|---|
| 100 | phr | Polymer |
| 1,5 | phr | BaZn-Stabilisator (Baerostab UBZ 171) |
| 3,0 | phr | expoxydiertes Sojabohnenöl (Edenol D 81) |
| 0,1 | phr | Isotridecylstearat (Loxiol G 40) |
| 0,2 | phr | hochmolekularer Mehrkomponentenester (Loxiol G 72) |
| 0,1 | phr | Calciumstearat (Ceasit SW) |

### Walzwerk (Schwabenthan)

Walzenmaterial: verchromte Oberflächen
Walzendurchmesser: 150 mm
Drehzahlverhältnis: 17/21 1/min
Walzentemperatur: 140 °C
Walzdauer: 5 min

### Ausführung:

Das Pulver-Compound wird zur Bildung einer zusammenhängenden Masse (Fell) auf die Walze gegeben. Nach Fellbildung wird das Fell 3 min "geschnitten" und "gewendet". Dann die Walzfelldicke auf 1,1 mm einstellen und das Fell noch weitere 2 min ohne Schneiden und Wenden auf der Walze plastifizieren. Nach vorgegebener Walzzeit wird das Walzfell abgenommen.

### Presse

### 30-t-Laborpresse (Werner & Pfleiderer URH 30)

Pressfläche: 350 × 350 mm
Pressbleche: verchromte Flächen
Pressrahmen: 220 × 220 × 1,0 mm

### Ausführung:

Zur Herstellung der Pressplatten werden die zuvor gefertigten Walzfelle entsprechend der verwendeten Rahmengröße zugeschnitten, in den Rahmen eingelegt und zusammen mit den die Außenflächen bildenden Pressblechen in die Laborpresse eingelegt. Unter den nachfolgend genannten Bedingungen werden die Felle zu einer Pressplatte ausgeformt.

| | |
|---|---|
| Presstemperatur: 150 °C | |
| ND-Pressdruck: 30 bar | ND-Presszeit: 2 min |
| HD-Pressdruck: 200 bar | HD-Presszeit: 3 min |
| Entformtemperatur: 40 °C | |
| Kühldruck: 200 bar | Abkühlzeit: ca. 8 min |

### Transmission und Haze (Großwinkel-Streuunq)

Zur Beurteilung der Transparenz einer Folie werden zwei Werte herangezogen:
- Die Gesamttransmission (hier: "Transmission"), die das Verhältnis von durchgelassenem zu einfallendem Licht darstellt und von den Absorptionseigenschaften sowie von den Oberflächenbedingungen abhängig ist
- Die Großwinkelstreuung (Haze), welche ein Maß für die Trübung ist.

### Messung:

Die Messung der Transmission sowie die Bestimmung der Großwinkelstreuung der über Walzen/Pressen erzeugten Halbzeuge erfolgt mit dem Transparenzmessgerät Haze-Guard Dual der Firma Byk-Gardner.

Die zu messende Probe wird senkrecht beleuchtet und das durchgelassene Licht in einer integrierenden Kugel photoelektrisch gemessen. Hierbei wird das senkrecht durchgelassene Licht zur Transmissionsbeurteilung sowie das im Winkel von 2° zur Einstrahlungsachse streuende Licht zur Beurteilung der Trübung (Haze) gemessen. Die Messungen werden nach ISO 13468 durchgeführt, dadurch ist gewährleistet, das die Messbedingungen bei der Kalibrierung sowie bei der Messung gleich sind.

**Tabelle 1: Übersicht Versuchs- und Vergleichsbeispiele und daraus hergestellte Pressplatten**

| PatentBeispiele | PBA-Anteil (Gew-%) | Microtrac MV (nm) | Shore-Härte A | Shore-Härte D | Dicke Pressplatte (mm) | Transmission, % | Haze | Bemerkung |
|---|---|---|---|---|---|---|---|---|
| Beispiel 1 | 46,9 | 61 | 85 | 26 | 1,50 | 84 | 13,2 | Pfropfgrundlage und Pfropfschale vernetzt und TGV < 150 nm |
| Beispiel 2 | 33 | 58 | 97 | 46 | 1,68 | 80,7 | 6,92 | |
| Beispiel 3 | 19,2 | 56 | 97 | 59 | 1,74 | 74,8 | 9,08 | |
| Beispiel 4 | 41,1 | 92 | 90 | 35 | 1,73 | 83,0 | 11,7 | |
| Beispiel 5 | 50 | 131 | 87 | 31 | 1,56 | 78,4 | 13,0 | |
| Beispiel 6 | 49,6 | 176 | 87 | 32 | 1,57 | 73,0 | 21,9 | Vergleichsbeispiele TGV ? 150 nm |
| Vergleichsbeispiel 1 | 52 | 224 | 84 | 24 | 1,83 | 52,6 | 43,5 | |
| Vergleichsbeispiel 2 | 56,6 | 336 | 88 | 31 | 1,59 | 52,4 | 52,7 | |
| Vergleichsbeispiel 3 | 57,2 | 327 | 85 | 27 | 1,64 | 48,3 | 63,7 | |
| Mischungsbeispiel 1 | 29,6 | | 94 | 59 | 1,67 | 75,4 | 16,4 | 0,75 Beispiel 2 + 0,25 Beispiel 3 |
| Mischungsbeispiel 2 | 40 | | 92 | 38 | 1,49 | 69,9 | 93,2 | 0,75 Beispiel 1 + 0,25 Beispiel 3 |
| Vinnolit VK 710 | ca. 50 | | 85 | 28 | 1,48 | 78,0 | 65,8 | Wettbewerbsmuster |
| Vinnolit K 707 E | ca. 50 | | 79 | 25 | 1,81 | 53,9 | 68,8 | |

Die Pfropfcopolymere Vinnolit VK 710 und Vinnolit K 707 E mit einem Acrylatanteil von ca. 50 Gew-% repräsentieren den Stand der Technik. Vor allem aufgrund des hohen Haze-Wertes (charaktierisiert die Großwinkel-Streuung) erscheinen die Pressplatten transluzent bis opak. Die erfindungsgemäßen Beispiele verfügen über eine deutlich bessere Transparenz, die sich vor allem durch ein wesentlich geringeres Streuverhalten auszeichnet. Die Versuchs- und Vergleichsbeispiele belegen den Effekt der Teilchengröße der Pfropfcopolymere auf die Transparenz daraus hergestellter PVC-Artikel.

Die erfindungsgemäßen Beispiele 1 bis 6 haben eine höhere Transparenz als die analog vernetzten Vergleichsbeispiele 1 bis 3, die Teilchengrößen oberhalb 170 nm aufweisen. Bei einer Vernetzung der Pfropfgrundlage und der Pfropfschale wird die Transparenz einer daraus hergestellten Pressplatte durch Absenken der mittleren Teilchengröße unterhalb 200 nm wesentlich verbessert.

Mischungen, bestehend aus den erfindungsgemäßen Pfropfcopolymeren, die sich im PBA-Gehalt unterscheiden (siehe Mischungsbeispiel 1), weisen eine höhere Transparenz auf als die Vergleichsbeispiele 1 bis 3.

Demgegenüber sind Mischungen eines transparenten Pfropfcopolymers mit S-PVC opak. So wird zum Beispiel eine an sich transparente Pressplatte aus des Pfropfcopolymer aus Beispiel 1 opak, wenn man einen Anteil von 25 Gew-% S-PVC zum Pfropfcopolymer beimischt.

## Patentansprüche

1. Verfahren zur Herstellung eines Vinylchlorid-Pfropfcopolymers durch Emulsionspolymerisation, wobei das Pfropfcopolymer eine Pfropfgrundlage und eine aufgepfropfte zumindest teilweise aus Vinylchlorid bestehende Copolymerphase enthält, umfassend die Schritte:
a) Herstellen einer Pfropfgrundlage durch Polymerisation von Monomeren, wobei durch Wahl der verwendeten Monomere die Glasübergangstemperatur Tg der Pfropfgrundlage eingestellt wird, und
b) Aufpfropfen einer Copolymerphase auf die unter a) hergestellte Pfropfgrundlage durch Emulsionspolymerisation unter Erhalt eines Vinylchlorid-Pfropfcopolymer-Latexes, wobei durch Wahl der verwendeten Monomere und der gegebenenfalls verwendeten Comonomere die Glasübergangstemperatur Tg der aufgepfropften Copolymerphase so eingestellt wird, dass die Glasübergangstemperatur Tg der Pfropfgrundlage niedriger ist als die Glasübergangstemperatur Tg der aufgepfropften Copolymerphase, und
c) Isolieren des Vinylchlorid-Pfropfcopolymers als Feststoff aus dem Vinylchlorid-Pfropfcopolymer-Latex,
**dadurch gekennzeichnet, dass** durch Wahl der Polymerisationsbedingungen in Schritt b) die mittlere volumenbezogene Teilchengröße des Vinylchlorid-Pfropfcopolymers, gemessen wie in der Beschreibung beschrieben, auf unter 200 nm eingestellt wird.

2. Verfahren nach einem der vorherigen Ansprüche, wobei in Schritt b) die Copolymerphase durch Emulsionspolymerisation unter Verwendung mindestens eines Emulgators aufgepfropft wird, wobei vorzugsweise 60 bis 100 Gew.-% der Emulgatormenge bezogen auf die gesamte Emulgatormenge vorgelegt wird.

3. Verfahren nach einem der vorherigen Ansprüche, wobei die Polymerisationstemperatur bei der Herstellung der Pfropfgrundlage zwischen 20 °C und 90 °C liegt, und/oder wobei die Polymerisationstemperatur bei der Herstellung der aufgepfropften Copolymerphase zwischen 45 °C und 90 °C liegt.

4. Verfahren nach einem der vorherigen Ansprüche, wobei der Anteil der Pfropfgrundlage 5 bis 70 Gew.-% und der Anteil der aufgepfropfter Copolymerphase 30 bis 95 Gew.-%, jeweils bezogen auf das Vinylchlorid-Pfropfcopolymer, beträgt.

5. Verfahren nach einem der vorherigen Ansprüche, wobei die Pfropfgrundlage durch Copolymerisation von Vinylverbindungen hergestellt wird.

6. Verfahren nach einem der vorherigen Ansprüche, wobei die aufgepfropfte Copolymerphase aus 60 bis 100 Gew.-% Vinylchlorid und aus 0 bis 40 Gew.-% anderen polymerisierbaren Vinylverbindungen hergestellt wird.

7. Verfahren nach einem der vorherigen Ansprüche, wobei die Pfropfgrundlage und/oder die aufgepfropfte Copolymerphase vernetzt wird.

8. Verfahren nach einem der vorherigen Ansprüche, wobei mindestens zwei verschiedene Vinylchlorid-Pfropfcopolymereunabhängig voneinander hergestellt und anschließend unter Erhalt einer Mischung gemischt werden, **dadurch gekennzeichnet, dass** sich die mindestens zwei verschiedenen Pfropfcopolymere durch ihre jeweilige prozentuale Gewichtsverteilung an Pfropfgrundlage und aufgepfropfter Copolymerphase voneinander unterscheiden.

9. Verfahren nach Anspruch 8, wobei die Schritte a), b) und c) und das Mischen so durchgeführt werden, dass die Mischung enthält
A) ein oder mehrere Pfropfcopolymere A jeweils enthaltend 41 bis 70 Gew.-% an Pfropfgrundlage und 30 bis 59 Gew.-% an aufgepfropfter Copolymerphase, und/oder
B) ein oder mehrere Pfropfcopolymere B jeweils enthaltend 26 bis 40 Gew.-% an Pfropfgrundlage und 60 bis 74 Gew.-% an aufgepfropfter Copolymerphase, und/oder
C) ein oder mehrere Pfropfcopolymere C jeweils enthaltend 5 bis 25 Gew.-% an Pfropfgrundlage und 75 bis 95 Gew.-% an aufgepfropfter Copolymerphase,
wobei die Mischung mindestens zwei verschiedene Pfropfcopolymere enthält, die unter A) und B), unter B) und C), unter A) und C) fallen, oder mindestens drei verschiedene Pfropfcopolymere, die unter A), B) und C) fallen.

10. Vinylchlorid-Pfropfcopolymer, hergestellt nach einem Verfahren nach einem der Ansprüche 1 bis 7.

11. Mischung enthaltend verschiedene Vinylchlorid-Pfropfcopolymere, hergestellt nach einem Verfahren nach einem der Ansprüche 8 bis 9.

12. Artikel, hergestellt unter Verwendung eines Vinylchlorid-Pfropfcopolymers nach Anspruch 10 oder unter Verwendung einer Mischung nach Anspruch 11.

13. Artikel nach Anspruch 12, wobei der Artikel eine Transmission von mindestens 65% und/oder einen Haze-Wert, gemessen wie in der Beschreibung beschrieben, von höchstens 60 aufweist.

14. Verwendung eines Vinylchlorid-Pfropfcopolymers nach Anspruch 10 oder einer Mischung nach Anspruch 11 zur Herstellung eines Artikels, vorzugsweise zur Herstellung von Folien mittels Extrusion und/oder Kalandrierung oder zur Herstellung von Formkörpern mittels Extrusion oder Spritzguss oder anderen thermoplastischen Formgebungsverfahren.

## Claims

1. A method for preparing a vinyl chloride graft copolymer by emulsion polymerization, wherein the graft copolymer contains a graft base and a grafted copolymer phase that at least partially consists of vinyl chloride, comprising the steps:
a) preparing a graft base by polymerization of monomers, wherein by selecting the monomers used the glass transition temperature Tg of the graft base is adjusted, and
b) grafting a copolymer phase onto the graft base prepared in a) by emulsion polymerization, yielding a vinyl chloride graft copolymer latex, wherein by selecting the monomers used and the optionally used comonomers the glass transition temperature Tg of the grafted copolymer phase is adjusted in such a way that the glass transition temperature Tg of the graft base is lower than the glass transition temperature Tg of the grafted copolymer phase, and
c) isolating the vinyl chloride graft copolymer as a solid from the vinyl chloride graft copolymer latex,
**characterized in that** by selecting the polymerization conditions in step b) the average particle size of the vinyl chloride graft copolymer is adjusted to below 200 nm.

2. The method according to any one of the preceding claims, wherein in step b) the copolymer phase is being grafted by emulsion polymerization using at least one emulsifier, wherein initially preferably 60 to 100 % by weight of the emulsifier amount is employed, based on the total amount of emulsifier.

3. The method according to any one of the preceding claims, wherein the polymerization temperature during the preparation of the graft base is between 20 °C and 90 °C, and/or wherein the polymerization temperature during the preparation of the grafted copolymer phase is between 45 °C and 90 °C.

4. The method according to any one of the preceding claims, wherein the percentage of the graft base is 5 to 70 % by weight and the percentage of the grafted copolymer phase is between 30 to 95 % by weight, each based on the vinyl chloride graft copolymer.

5. The method according to any one of the preceding claims, wherein the graft base is prepared by copolymerization of vinyl compounds.

6. The method according to any one of the preceding claims, wherein the grafted copolymer phase is prepared from 60 to 100 % by weight of vinyl chloride and from 0 to 40 % by weight of other polymerizable vinyl compounds.

7. The method according to any one of the preceding claims, wherein the graft base and/or the grafted copolymer phase is being cross-linked.

8. The method according to any one of the preceding claims, wherein at least two different vinyl chloride graft copolymers are prepared independently of each other and subsequently mixed, yielding a blend, **characterized in that** the at least two different graft copolymers differ from each other by their respective percentage weight distribution of graft base and grafted copolymer phase.

9. The method according to claim 8, wherein the steps a), b) and c) and the mixing are performed in such a way that the blend contains:
A) one or more graft copolymers A, each containing 41 to 70 % by weight of graft base and 30 to 59 % of grafted copolymer phase, and/or
B) one or more graft copolymers B, each containing 26 to 40 % by weight of graft base and 60 to 74 % of grafted copolymer phase, and/or
C) one or more graft copolymers C, each containing 5 to 25 % by weight of graft base and 75 to 95 % by weight of grafted copolymer phase,
wherein the blend contains at least two different graft copolymers that belong to A) and B), to B) and C), to A) and C), or at least three different graft copolymers that belong to A), B) and C).

10. A vinyl chloride graft copolymer, prepared according to a method according any one of claims 1 to 7.

11. A blend, containing different vinyl chloride graft copolymers, prepared according to a method according to any one of claims 8 to 9.

12. An article, prepared by using a vinyl chloride graft copolymer according to claim 10 or by using a blend according to claim 11.

13. The article according to claim 12, wherein the article has a transmission of at least 65 % and/or a haze value of at most 60.

14. Use of a vinyl chloride graft copolymer according to claim 10 or a blend according to claim 11 for preparing an article, preferably for preparing films by way of extrusion and/or calendering, or for preparing molded articles by way of extrusion or injection molding or other thermoplastic molding methods.

## Revendications

1. Procédé de préparation d'un copolymère greffé de chlorure de vinyle par polymérisation en émulsion, dans lequel le copolymère greffé contient une base de greffage et une phase copolymère greffée consistant au moins partiellement en du chlorure de vinyle, contenant les étapes consistant à :
a) préparer une base de greffage par polymérisation de monomères, dans lequel la température de transition vitreuse Tg de la base de greffage est ajustée en choisissant les monomères utilisés, et
b) greffer une phase copolymère sur la base de greffage préparée en a) par polymérisation en émulsion pour obtenir un latex de copolymère greffé de chlorure de vinyle, dans lequel, par le choix des monomères utilisés et des comonomères facultativement utilisés, la température de transition vitreuse Tg de la phase copolymère greffée est ajustée de sorte que la température de transition vitreuse Tg de la base de greffage soit inférieure à la température de transition vitreuse Tg de la phase copolymère greffée, et
c) isoler le copolymère greffé de chlorure de vinyle sous forme solide à partir du latex de copolymère greffé de chlorure de vinyle,
**caractérisé en ce que**, par le choix du lit de polymérisation dans l'étape b), la taille moyenne des particules du copolymère greffé de chlorure de vinyle est ajustée à moins de 200 nm.

2. Procédé selon l'une quelconque des revendications précédentes, dans lequel, à l'étape b), la phase copolymère est greffée par polymérisation en émulsion en utilisant au moins un émulsifiant, de préférence en introduisant de 60 à 100 % en poids de la quantité d'émulsifiant par rapport à la quantité totale d'émulsifiant.

3. Procédé selon l'une quelconque des revendications précédentes, dans lequel la température de polymérisation lors de la préparation de la base de greffage est comprise entre 20 °C et 90 °C, et/ou dans lequel la température de polymérisation lors de la préparation de la phase copolymère greffée est comprise entre 45 °C et 90 °C.

4. Procédé selon l'une quelconque des revendications précédentes, dans lequel la proportion de la base de greffage est de 5 à 70 % en poids et la proportion de la phase copolymère greffée est de 30 à 95 % en poids, respectivement par rapport au copolymère greffé de chlorure de vinyle.

5. Procédé selon l'une quelconque des revendications précédentes, dans lequel la base de greffage est préparée par copolymérisation de composés vinyliques.

6. Procédé selon l'une quelconque des revendications précédentes, dans lequel la phase copolymère greffée est préparée à partir de 60 à 100 % en poids de chlorure de vinyle et de 0 à 40 % en poids d'autres composés vinyliques polymérisables.

7. Procédé selon l'une quelconque des revendications précédentes, dans lequel la base de greffage et/ou la phase copolymère greffée est réticulée.

8. Procédé selon l'une quelconque des revendications précédentes, dans lequel au moins deux copolymères greffés de chlorure de vinyle différents sont préparés indépendamment l'un de l'autre et sont ensuite mélangés pour obtenir un mélange, **caractérisé en ce que** lesdits au moins deux copolymères greffés différents se distinguent l'un de l'autre par leur répartition en poids respective en termes de base de greffage et de phase copolymère greffée.

9. Procédé selon la revendication 8, dans lequel les étapes a), b) et c) et le mélange sont effectués de sorte que le mélange contient
A) un ou plusieurs copolymères greffés A contenant chacun 41 à 70 % en poids de base de greffage et 30 à 59 % en poids de phase copolymère greffée, et/ou
B) un ou plusieurs copolymères greffés B contenant chacun 26 à 40 % en poids de base de greffage et 60 à 74 % en poids de phase copolymère greffée, et/ou
C) un ou plusieurs copolymères greffés C contenant respectivement 5 à 25 % en poids de base de greffage et 75 à 95 % en poids de phase copolymère greffée,
dans lequel le mélange contient au moins deux copolymères greffés différents parmi A) et B), parmi B) et C), parmi A) et C), ou au moins trois copolymères greffés différents parmi A), B) et C).

10. Copolymère greffé de chlorure de vinyle, préparé par un procédé selon l'une quelconque des revendications 1 à 7.

11. Mélange contenant différents copolymères greffés de chlorure de vinyle, préparé par un procédé selon l'une quelconque des revendications 8 à 9,

12. Article fabriqué en utilisant un copolymère greffé de chlorure de vinyle selon la revendication 10 ou en utilisant un mélange selon la revendication 11.

13. Article selon la revendication 12, dans lequel l'article présente une transmission d'au moins 65 % et/ou une valeur Haze d'au plus 60.

14. Utilisation d'un copolymère greffé de chlorure de vinyle selon la revendication 10 ou d'un mélange selon la revendication 11 pour la fabrication d'un article, de préférence pour la fabrication de films par extrusion et/ou calandrage ou pour la fabrication de corps moulés par extrusion ou moulage par injection ou autres procédés de moulage thermoplastiques.
